# EUROPEAN PATENT APPLICATION

(11) **EP 1 437 884 A2**
(43) Date of publication of application: **14.07.2004**
(21) Application number: 03104967.9
(22) Date of filing: 23.12.2003
(51) Int. Cl.: H04N 5/208

(54) **Image processing with minimization of ringing artifacts and noise**

(30) Priority: 11.01.2003 KR 2003001871
(71) Applicant: Samsung Electronics Co., Ltd., Suwon-si, Gyeonggi-do 442-742 (KR)
(72) Inventor: Paek, Nam-ju, Gyunggi-do (KR)
(74) Representative: Derry, Paul Stefan

(57) **Abstract**

A combination system 200 has inbuilt therein a DVD player 220 and a VCR. A SCART input 210 receives data from an external signal source, such as a satellite of cable decoder. A switching module 240 selects and provides to a SCART output AV signals from one of the DVD player, the VCR and the decoder depending on a user input. This allows a television set having only one SCART input to be provided at that SCART input with AV signals from three separate AV signal sources, namely a DVDP, a VCR and the external signal source 300, without reconnecting the SCART cables connecting the devices.

## Description

A first aspect of the invention provides a device comprising a source of audio-visual signals and a SCART output port, for connection to a television set or the like.

A second aspect of the present invention relates to a method of operating a device comprising a source of audio-visual signals and a SCART output port, for connection to a television set or the like.

A DVDP/VCR combosystem is a system that performs the functions of both a digital video disc player (DVDP) and a video cassette recorder (VCR). Such combosystems typically are connectable to a television set by a SCART lead. To watch satellite broadcasts, a satellite broadcast receiver is required. Satellite broadcast receivers typically are provided in the form of a set-top box, and tend to have SCART outputs. However, it is not uncommon for television sets to have fewer SCART inputs than the number required. In such a case, a user needs manually to disconnect one input device from the television set before connecting an input device which is required to be used in its place.

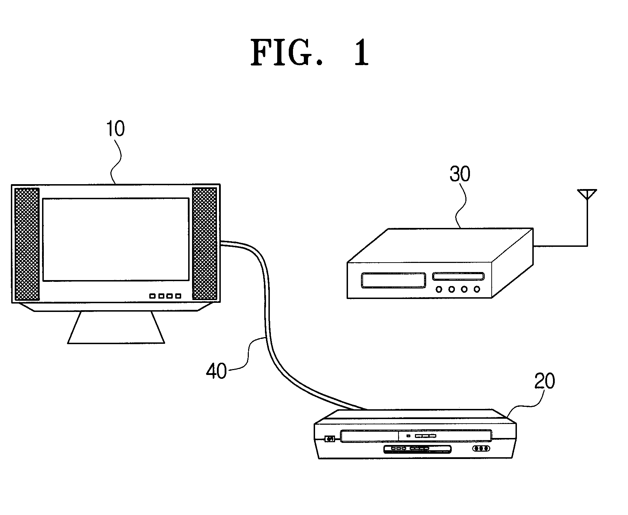

Figure 1 is a view for explaining the conventional connections between a television set and a combosystem or a set-top box. Referring to Figure 1, a television set 10 is a video display device, a combosystem 20 is an input device having DVDP and VCR functionality. A set-top box 30 is a satellite broadcast receiver. In this example, the television set 10 has one SCART input.

An output port of the combosystem 20 is connected to the SCART input of the television set 10 via a SCART jack cable 40, allowing AV signals from the combosystem 20 to be reproduced on the television set 10. In order to display AV signals from the set-top box 30, the SCART cable 40 needs to be disconnected from the combosystem 20 and connected instead to an output port of the set-top box. Alternatively, the SCART cable 40 could be removed from the television set 10 and a new cable (not shown) connected between the set-top box 30 and the television set 10, although this is even more inconvenient.

The first aspect of the invention is characterised in comprising a SCART input port for connection to an external device, a switching unit and a controller responsive to an input to connect either the source of audio-visual signals or the SCART input port to the SCART output port.

The second aspect of the invention is characterised in comprising:
receiving signals at a SCART input port, and
responsive to an input, controlling a switching unit to connect either the source of audio-visual signals or the SCART input port to the SCART output port.

An embodiment of the invention will be described, by way of example only, with reference to the accompanying drawings in which:
Figure 1 illustrates conventional connections between a television set and AV signal sources;
Figure 2 illustrates a system including a combination system device according to the present invention;
Figure 3 illustrates components of the combination system of Figure 2;
Figure 4 illustrates a switching module forming part of the Figure 3 device; and
Figure 5 is a flow chart illustrating operation of the combination system of Figure 3.

In the drawings, like reference numerals refer to like elements throughout.

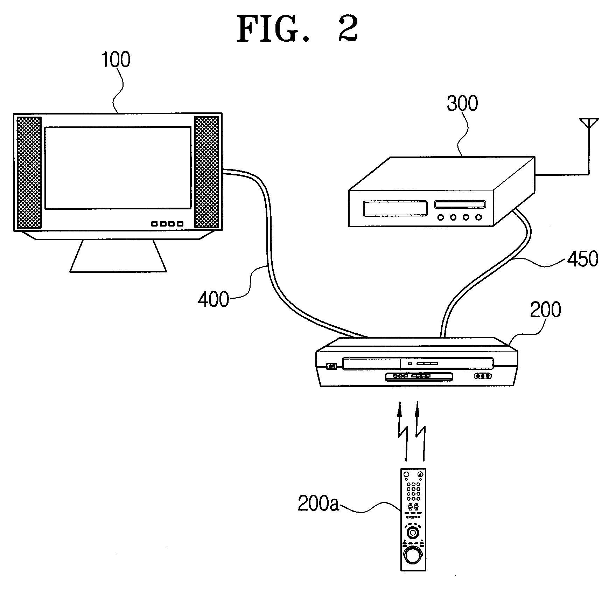

Referring to Figure 2, a combination system, or combosystem, 200 is connected to an European-oriented display device, here a television set 100, and an external signal source 300 via transmission cables, preferably SCART leads, 400 and 450 respectively. The combination system 200 is an European-oriented video recording/reproducing device with a DVDP and a VCR. The external signal source 300 produces RGB (red, green, blue) video signals received externally, or provided internally. The external signal source 300 may be a satellite broadcast receiver for receiving broadcast signals from a satellite, a cable television decoder, or the like.

The DVDP included in the combosystem 200 produces AV signals from DVD discs, and the VCR can playback from and record onto a magnetic tape included in a video cassette. The DVDP may additionally be able to play Compact Discs (CDs), Video Compact Discs (VCDs) and the like.

The combosystem 200 is controllable using a remote controller 200a, which preferably communicates using infrared signals. It may also or alternatively be controllable using a wireless keyboard or the like (not shown).

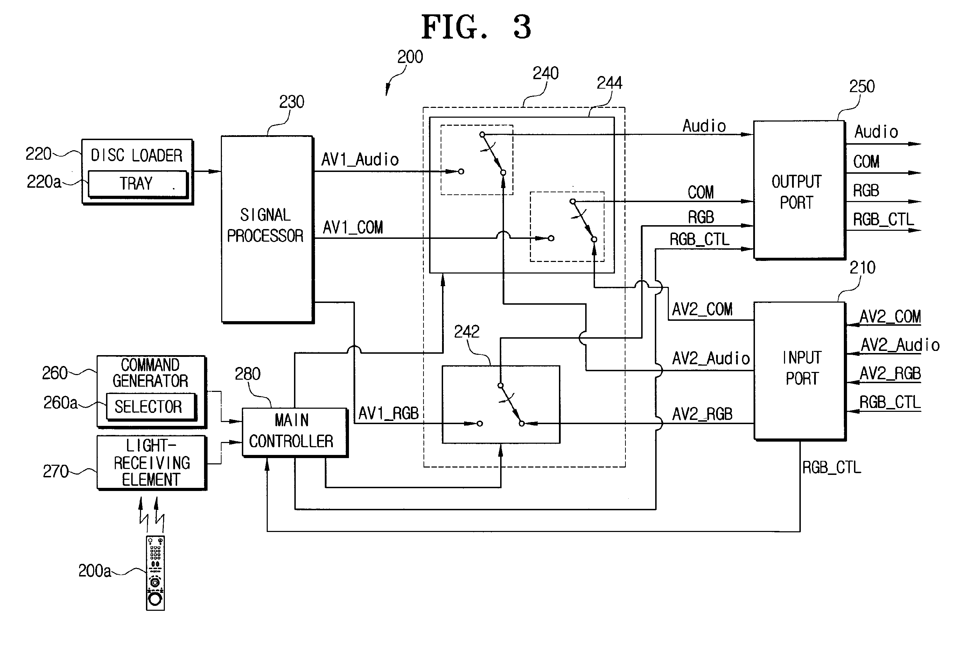

Referring additionally to Figure 3, the combosystem 200 has an input port 210, a disc loader 220, a signal processor 230, a switching module 240, an output port 250, a command generator 260, a light-receiving element 270, and a main controller 280. The disc loader 220 loads and provides the signal processor 230 with data recorded on a disc present in a tray 220a. In the following, functions of the VCR component of the combosystem 200 are omitted, because DVDP generated signals are potentially more problematic with respect to conflict with signals provided by the external signal source 300. In particular, VCR generated signals have composite video signal and audio signal components only, whereas satellite receivers and DVD players usually have RGB video signal components aswell as composite video signal and audio signal components.

The input port 210 is an interface to which one end of the European-oriented SCART cable 450 is connected. Accordingly, the input port 210 receives AV signals provided by the external signal source 300, and feeds them to the switching module 240. This AV signal consists of an external RGB video signal (AV2_RGB), an RGB control signal (RGB_CTL), an external composite video signal (AV2_COM), and an external audio signal (AV2_Audio).

The external RGB video signal (AV2_RGB) is fed to a first switching sub-module 242 of the switching module 240. The external composite video signal (AV2_COM) and the external audio signal (AV2_Audio) are fed to a second switching module 244, forming part of the switching module 240. The RGB control signal (RGB_CTL) is fed to the main controller 280.

As will be appreciated, the external composite video signal (AV2_COM) is a signal comprising a sum (Y + C) of a luminance signal (Y) and a colour signal (C = P_{R-Y} + P_{B-Y}), which includes a synchronous signal. The RGB control signal (RGB_CTL) can be either high or low, allowing a television set to determine whether an RGB video signal is being provided. AV2 denotes signals provided by the external signal source 300.

Data provided by the disc loader 220 is separated into three components, namely a first RGB video signal (AV1_RGB), a first composite video signal (AV1_COM), and a first audio signal (AV1_Audio), similarly to the corresponding AV2 signals. Furthermore, the VCR produces the same signal components, except the RGB video signal.

The signal processor 230 feeds the first RGB video signal (AV1_RGB) from the disc loader 220 into the first switching sub-module 242, feeds the first composite video signal (AV1_COM) into the second switching sub-module 244 of the switching module 240, and converts the first audio signal (AV1_Audio) into an analogue signal before feeding it into the second switching sub-module 244.

The first and second switching sub-modules 244 selectively provide signals received from the signal processor 230 or the input port 210. In particular, the first switching sub-module 242 provides at its output either the first RGB video signal (AV1_RGB) from the signal processor 230 or the external RGB video signal (AV2_RGB) received via the input port 210.

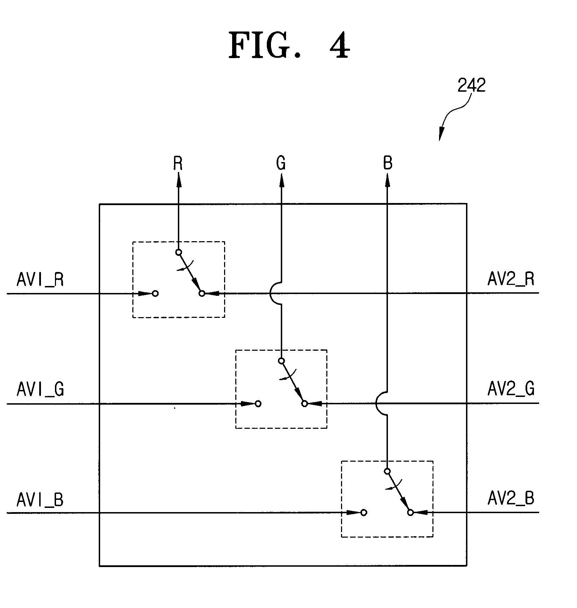

In actuality, the RGB video signals AV1_RGB and AV2_RGB are separated into R, G, and B video signals AV1_R, AV1_G, and AV1_B, and AV2_R, AV2_G, and AV2_B respectively, as shown in Figure 4. These signals are fed to the first switching sub-module 242, which selects AV1 signals or AV2 signals based on control signals from the main controller 280.

Similarly, the second switching sub-module 244 selects AV1_Audio and AV1_COM signals or AV2_Audio and AV2_COM signals for feeding to the output port 250 depending on a control signal provided by the main controller 280.

The output port 250 is an interface to which the European-oriented SCART cable 400 is connected, thereby connecting the combosystem to the television set 100. Further, the output port 250 synchronises the RGB, COM, and Audio signals according to a synchronous signal component of the composite video signal COM, and provides final AV signals Audio, RGB, and COM to the television 100, together with the appropriate RGB control signal RGB_CTL. Accordingly, signals provided by the switching module 240 to the output port 250 are able to be used by the television set 100.

If a user wants to view signals provided by the satellite receiver 300, he/she presses a suitable key or key combination on the remote control 200a. Corresponding signals are received by the light receiving element 270, and a signal selecting the satellite receiver 300 is provided thereby to the main controller 280. The main controller responds by providing control signals to the switching sub-modules 242, 244 to switch the AV2 signals to the output port 250, and by providing the RGB-CTL signal received at the input port 210 to the output port. It is preferred but not essential that the light-receiving element 270 is supported on a housing of the combosystem 200. A user can instead select for viewing signals provided by the DVDP using the remote control 200a, and the main controller 280 responds by providing control signals to the switching sub-modules 242, 244 to switch the AV1 signals to the output port 250.

The command generator 260 is provided with plural function buttons (not shown), and is able to generate for the main controller 280 appropriate commands for selecting and executing functions supported in the combosystem 200. The command generator 260 includes a selector 260a, for selecting between the DVDP and the VCR of the combosystem 200 and the external signal source 300.

The main controller 280 uses a control program held in memory (not shown) to carry out operations of the combosystem 200 instructed by a user through the command generator 260 or the remote controller 200a.

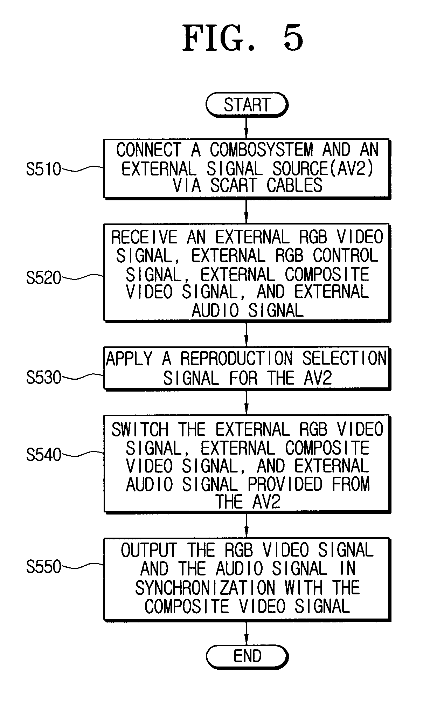

Operation of the combosystem 200 is now described in more detail with reference additionally to Figure 5.

Following connection of the combosystem 200 and the external signal source 300 via a SCART cable (S510), the input port 210 receives AV signals provided from the external signal source 300, namely the external RGB video signal AV2_RGB, RGB control signal RGB_CTL, external composite video signal AV2_COM, and external audio signal AV2_Audio (S520).

With the DVDP of the combosystem 200 producing AV signals, the first switching module 242 receives the first RGB video signal AV1_RGB and the second switching module 244 receives the first composite video signal AV1_COM and the first audio signal AV1_Audio. With the external signal source 300 switched on, the first switching module 242 also receives the external RGB video signal AV2_RGB from the input port 210 and the second switching module 244 receives the external composite video signal AV2_COM and the external audio signal AV2_Audio. The RGB control signal RGB_CTL is provided from the input port 210 to the main controller 280.

If a signal is applied by the selector 260a selecting the external signal source 300 (S530), the switching module 240 is controlled by the main controller 280 to feed the AV signals provided from the external signal source 300 to the output port 250 (S540). In particular, the first switching sub-module 242 is controlled to select and feed to the output port 250 the external RGB video signal AV2_RGB, the second switching sub-module 244 feeds to the output port 250 the external composite video signal AV2_COM and the external audio signal AV2_Audio, and the RGB control signal RGB_CTL is provided by the main controller 280 to the output port 250.

The output port 250 provides the external RGB video signal AV2_RGB, the external composite video signal AV2_COM, and the external audio signal AV2_Audio in synchronisation with a synchronous signal included in the external composite video signal AV2_COM, and feeds to the television 100 the RGB control signal RGB_CTL from the main controller 280 (S550).

The result is that a television set having only one SCART input can be provided at that SCART input with AV signals from three separate AV signal sources, namely a DVDP, a VCR and the external signal source 300, which may be a satellite or cable receiver, without re-connecting the SCART cables connecting the devices.

As described above, when the AV signals provided by the external signal source 300 include RGB video signals, the main controller 280 controls both the first and second switching units 242 and 244. If, on the other hand, no RGB video signals are included, the main controller 280 controls only the second switching sub-module 244, i.e. the first switching sub-module 242 is not relevant. Whether or not an RGB video signal is included depends on the nature of the signals received and processed by the external signal source 300.

The invention is not limited by the above-described embodiment, and it will be appreciated by those skilled in the art that numerous other embodiments are possible. The scope of the invention is limited only by the claims.

## Claims

1. A device comprising a source of audio-visual signals (230) and a SCART output port (250), for connection to a television set or the like,
**characterised in** comprising a SCART input port (210) for connection to an external device, a switching unit (240) and a controller (280) responsive to an input to connect either the source of audio-visual signals (230) or the SCART input port (210) to the SCART output port(250).

2. A device as claimed in claim 1, in which the device comprises first and second sources of audio-visual signals, and the controller (280) is responsive to an input to connect one of the first and second sources and the SCART input to the SCART output.

3. A device as claimed in claim 2, in which the first and second sources are a video cassette recorder and a DVD player.

4. A device as claimed in any preceding claim, in which the switching unit comprises a sub-module (242) for the handling of RGB signals.

5. A device as claimed in any preceding claim, in which the controller is arranged when the SCART input port (210) is connected to the SCART output port (250) to detect the presence of a 'high' RGB control signal at the input SCART port.

6. A device as claimed in any preceding claim, in which the output port is arranged to synchronise composite video and audio signals with a synchronous signal included in a composite video signal received at the SCART input port.

7. A device as claimed in any preceding claim, in which the controller is connected to receive RGB control signals directly from the SCART input port, and to provide corresponding signals directly to the SCART output port.

8. A method of operating a device comprising a source of audio-visual signals (230) and a SCART output port (250), for connection to a television set or the like, **characterised in** comprising:
receiving signals at a SCART input port (210), and
responsive to an input, controlling a switching unit (240) to connect either the source of audio-visual signals (230) or the SCART input port (210) to the SCART output port(250).
